# FASCICULE DE BREVET EUROPEEN

(11) **EP 1 920 970 B1**
(45) Date de publication et mention de la délivrance du brevet: **06.10.2010**
(21) Numéro de dépôt: 07119754.5
(22) Date de dépôt: 31.10.2007
(51) Int. Cl.: B60Q 1/115

(54) **Système de correction dynamique de l'orientation d'une source lumineuse d'un véhicule et procédé associé**
Dynamisches Korrektursystem der Ausrichtung einer Lichtquelle eines Fahrzeugs und entsprechendes Verfahren
System for dynamic correction of the direction of a light source of a vehicle and associated method

(30) Priorité: 10.11.2006 FR 0609857
(43) Date de publication de la demande: 14.05.2008
(73) Titulaire: VALEO VISION, 93012 Bobigny (FR)
(72) Inventeur: Leleve, Joël, 93800, Epinay sur Seine (FR)

(56) Documents cités:
- EP-A2- 0 825 063
- DE-A1- 19 653 662
- DE-A1- 19 902 015
- FR-A1- 2 848 160
- GB-A- 2 346 436

## Description

La présente invention a pour objet un système de correction dynamique de l'orientation d'une source lumineuse montée sur un véhicule automobile, ainsi qu'un procédé de correction mettant en oeuvre un tel système. Le système selon l'invention est un système optoélectronique qui permet de corriger instantanément une mauvaise orientation d'un faisceau lumineux émis par un dispositif projecteur du véhicule considéré, en réponse à des variations subites de l'assiette du véhicule.

Le domaine de l'invention est d'une façon générale, celui des dispositifs d'éclairage lumineux pour véhicules circulant sur la route tels que, par exemple, des véhicules automobiles et des véhicules de type poids lourds. Plus précisément, l'invention concerne l'orientation des projecteurs de lumière de ces véhicules.

On entend par correction optoélectronique, une correction réalisée grâce à des composants qui sont des transducteurs passant de l'électronique à l'optique ou de l'optique à l'électronique. Actuellement, tous les véhicules roulant sur la route comportent un dispositif d'éclairage de la route utilisé particulièrement la nuit ou lors d'intempéries. Classiquement, il existe sur les véhicules automobiles notamment deux types d'éclairage : un éclairage appelé "feu de route" qui éclaire la route intégralement sur une longue distance et un éclairage appelé "feu de croisement" qui éclaire la route sur une courte distance pour éviter d'éblouir les conducteurs des véhicules susceptibles de venir en sens inverse ou de rouler devant.

Dans le cas de l'éclairage de croisement, la portée de l'éclairage est ajustée notamment en orientant les projecteurs dans le plan vertical. Classiquement, l'orientation du faisceau lumineux émis par les projecteurs de croisement est réglée par des spécialistes, en particulier des mécaniciens automobiles, en fonction d'une indication donnée par le constructeur du dispositif d'éclairage. L'angle d'orientation du faisceau lumineux est donné par le constructeur en pourcentage de radiants. Cet angle d'orientation des faisceaux lumineux est donné pour un véhicule dans une position standard, qui désigne la position dans laquelle le châssis du véhicule est sensiblement parallèle à la route, c'est à dire la position dans laquelle l'angle que forme le châssis du véhicule avec le plan horizontal est plat. On dit alors que l'assiette du véhicule est plate. D'une façon générale, l'assiette d'un véhicule correspond à une mesure de l'inclinaison du véhicule par rapport au plan de la route qu'il emprunte.

Cependant, on sait que l'assiette du véhicule peut être modifiée en fonction de la situation dans laquelle se trouve le véhicule, notamment en fonction de la charge du véhicule. En effet, lorsque le véhicule est très chargé, l'arrière du véhicule est abaissé, ce qui implique que l'avant du véhicule est relevé. Le véhicule n'est donc plus parallèle à la route. Dans ce cas, les faisceaux lumineux des projecteurs de croisement du véhicule sont dirigés vers l'horizon, au lieu d'être dirigés vers la route. Ils peuvent alors éblouir les conducteurs de véhicules venant en sens inverse ou roulant devant.

On comprend ainsi que le réglage initial des projecteurs de croisement, réalisé pour un véhicule en position standard, n'est pas correct dès lors que l'assiette du véhicule n'est plus plate.

Pour résoudre cet inconvénient, certains véhicules sont équipés d'un système de correction automatique fixé sur le châssis du véhicule. Ce système comporte des capteurs placés sur les essieux avant et arrière du véhicule et qui mesurent chacun la différence de hauteur entre la position de la roue et le châssis, en fonction de la charge du véhicule. Un petit calculateur, intégré dans le système de correction automatique, permet de déterminer l'assiette du véhicule et de donner des informations à de petits moteurs qui orientent le projecteur. Cependant, ce système présente des inconvénients. En effet, les capteurs sont placés à proximité réduite des roues, c'est-à-dire à des endroits difficilement accessibles par l'homme ou un robot lors de la fabrication du véhicule. Ainsi l'opération de mise en place des capteurs, lors de la fabrication du véhicule, nécessite une grande précision et, par conséquent, un investissement en temps et en argent important. De plus, ces capteurs sont soumis à des projections d'eau, de gravillons et autres éléments pouvant se trouver sur la route. La connectique de ces capteurs et les capteurs eux-mêmes doivent donc être robustes pour supporter ces projections.

Pour répondre à ces inconvénients, on a récemment proposé des systèmes de correction optoélectroniques. Par exemple, le brevet français publié sous le numéro FR 2848160 propose un système pour commander l'orientation des projecteurs d'un véhicule à partir d'une caméra et d'un point spécifique du faisceau lumineux, en fonction de l'assiette du véhicule. Ce système consiste à fixer une caméra sur le véhicule, ou à utiliser une caméra déjà en place dans le véhicule, pour filmer la route qui s'étend devant le véhicule. Une unité de traitement d'images assure ensuite le traitement d'au moins une image afin de déterminer la ligne d'horizon de la scène située devant le véhicule. A partir de cette ligne d'horizon, il est possible de déterminer un point spécifique de la scène, puis de régler le projecteur jusqu'à ce qu'un point lumineux spécifique émis par une source d'émission lumineuse montée sur le réflecteur du projecteur soit confondu avec le point spécifique. Dans certains modes de réalisation, la source d'émission lumineuse est de type infrarouge, tout comme la caméra utilisée.

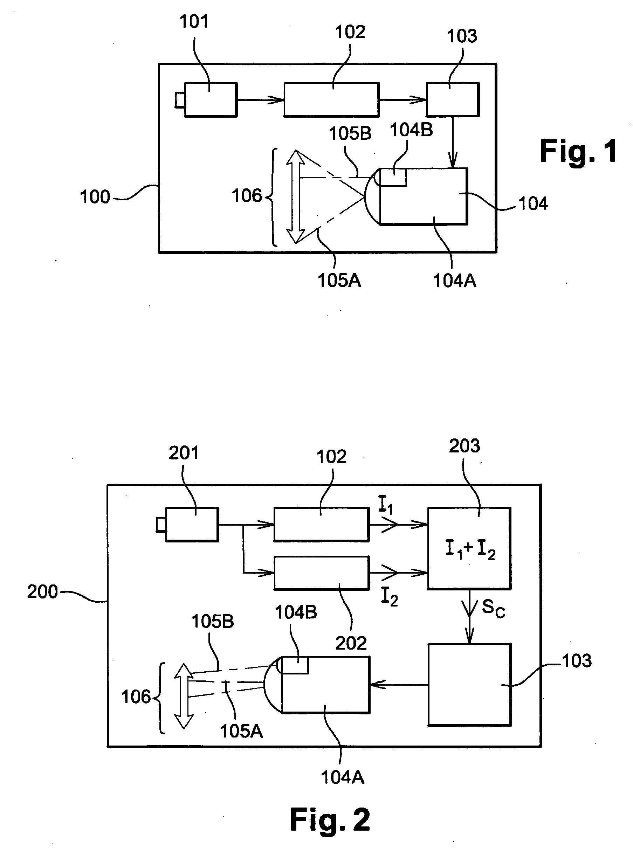

La figure 1 représente schématiquement un exemple de réalisation du système 100 de commande de l'orientation d'un projecteur de véhicule selon le brevet publié sous FR 2848160. La scène se déroulant devant le véhicule en marche est filmée par une caméra 101 orientée vers l'avant du véhicule. Dans d'autres exemples, la caméra est orientée vers l'arrière du véhicule, sans que le système décrit ici n'ait à subir de modifications significatives. La caméra peut éventuellement être utilisée pour la mise en oeuvre d'autres fonctions que celles liées à l'objet du brevet FR 2848160. La caméra 101 est avantageusement adaptée à la prise de vue de nuit par exemple en étant du type infrarouge. Un dispositif de correction statique de l'assiette du véhicule 102, intégrant notamment une première unité de traitement des images acquises - ou capturées - par la caméra 101, produit un premier ensemble d'informations relatives à une mesure statique de l'assiette du véhicule, c'est à dire une mesure moyenne de l'assiette sur une période de plusieurs secondes.

Un dispositif de contrôle de rotation 103 d'une source lumineuse 104 assure le contrôle de l'orientation des projecteurs lumineux 104A et 104B de façon appropriée en fonction des informations reçues du dispositif de correction statique de l'assiette du véhicule 102.

Le projecteur lumineux 104A émet un premier faisceau lumineux 105A vers l'avant du véhicule. Le projecteur lumineux 104B émet un deuxième faisceau lumineux 105B qui est apte à projeter sur la route un point lumineux spécifique. La solidarité des projecteurs lumineux 104A et 104B leur permet de se déplacer simultanément d'un point de vue angulaire. Les mouvements des faisceaux lumineux 105A et 105B se traduisent par un balayage lumineux 106 d'amplitude prédéterminée.

Le dispositif de correction statique d'assiette est caractérisé par une grande constante de temps. On entend par grande constante de temps, le fait que le dispositif 102 produit des informations à partir d'images qui sont espacées dans le temps, même si une caméra accessible économiquement possède une fréquence d'acquisition d'images avoisinant les 30 images par seconde. En effet, la scène de route filmée est souvent perturbée, par exemple par la présence d'autres véhicules apparaissant et disparaissant des images capturées, ou encore par l'existence d'environnements perturbateurs tels que les cailloux et les irrégularités de la chaussée, qui génèrent des incertitudes dans le calcul de la ligne d'horizon, et imposent un temps de filtrage relativement grand devant la fréquence d'échantillonnage d'images de la caméra.

Ainsi, un tel système oblige à accepter une moins grande précision pour obtenir un temps de réponse plus court, sans jamais atteindre un temps de réponse satisfaisant, par exemple de l'ordre de 0,2 seconde, souhaitable lorsqu'une variation rapide d'assiette est observée. C'est pourquoi ce système présente des risques d'erreur pouvant mener à des situations inconfortables voire dangereuses pour l'automobiliste, ces situations étant liées à des amplitudes de correction excessives et/ou intempestives. Il est par ailleurs totalement inadapté à une correction dynamique d'assiette. Une telle correction dynamique désigne une correction d'assiette, qui se traduit par une intervention sur l'orientation d'au moins une source lumineuse, qui est réalisée très rapidement, c'est à dire dans des temps avoisinant 0,2 seconde. Une telle correction permet de s'adapter aux variations rapides d'assiette, qui sont observées lors des phases d'accélération ou de freinage brutales.

Un des objets essentiels de l'invention est de proposer un système de correction pour l'orientation d'un projecteur lumineux qui répond au problème qui vient d'être exposé, à savoir une absence de correction dynamique d'assiette d'un véhicule. A cet effet, le système de correction selon l'invention propose de réaliser un traitement d'images complémentaire dans lequel le déplacement instantané des images capturées par la caméra est analysé pour déterminer des variations brusques de cadrage, révélatrice de phases de freinage ou d'accélération notables qui influent immédiatement sur l'assiette du véhicule. Avantageusement, un signal de déplacement vertical entre deux images consécutives est délivré en temps réel et permet de détecter de telles phases.

A cet effet, on peut par exemple utiliser des applications logicielles spécifiques du type de celles présentes dans les caméscopes pour effectuer des opérations de stabilisation d'images. Le traitement d'images complémentaires permet alors d'obtenir des informations de correction dynamique d'assiette, qui, combinées aux informations de correction statique d'assiette disponibles dans des systèmes de l'état de la technique, permettent l'obtention d'un signal de correction appropriée pour réaliser une correction rapide. La solution proposée par l'invention est sans incidence significative sur le coût global du système de correction de l'orientation des dispositifs projecteurs considérés.

Ainsi, dans l'invention, on propose un système de correction automatique et dynamique d'une orientation d'un faisceau lumineux émis par une source lumineuse de véhicule en fonction de l'assiette dudit véhicule, en associant un traitement d'images à correction statique adapté aux variations lentes de ladite assiette occasionnées notamment par des variations de charge au sein dudit véhicule et un traitement d'images à correction dynamique adapté aux variations rapides de ladite assiette dues notamment aux freinages et accélérations dudit véhicule, au moyen d'un dispositif de fusion et de filtrage de signaux émis simultanément par lesdits dispositifs. Un dispositif de contrôle de rotation de la source lumineuse oriente des projecteurs lumineux de façon appropriée à la conduite en fonction des informations reçues du dispositif de fusion et de filtrage.

Par système de correction statique, on entend une correction relative à l'attitude du véhicule à l'arrêt ou une correction à grande constante de temps (par exemple deux minutes). Préférentiellement dans la présente invention, le système de correction statique est à grande constante de temps.

A noter que le dispositif de correction statique peut également relever d'une technologie basée sur le temps de vol de la lumière entre la source d'émission et le récepteur photosensible après que cette lumière ait été réfléchie par le revêtement routier. Le dispositif de correction statique peut également utiliser des capteurs potentiométriques fixés sur le châssis du véhicule et mesurant chacun l'angle que fait avec ce châssis un bras dont une extrémité est montée pivotante sur le châssis et dont l'autre extrémité est raccordée à un élément verticalement solidaire de la roue associée.

L'invention concerne un système de correction de l'orientation d'une source lumineuse d'un véhicule en fonction de l'assiette dudit véhicule, ledit système comportant :
- une caméra, montée dans le véhicule, pour acquérir une succession d'images représentatives d'une scène de route se déroulant devant ou derrière le véhicule;
- un dispositif de correction à l'arrêt ou à grande constante de temps de l'assiette du véhicule, faisant intervenir notamment une première unité de traitement des images acquises par la caméra, et produisant un premier ensemble d'informations relatives à une mesure de l'assiette du véhicule;
caractérisé en ce que le système de correction comporte également :
- une deuxième unité de traitement d'images, acquises par la caméra, produisant un deuxième ensemble d'informations relatives à une mesure de déviation d'un cadrage des images acquises ;
- un dispositif de fusion de données pour combiner le premier ensemble d'informations et le deuxième ensemble d'informations et produire une information de correction d'assiette.

Outre les caractéristiques principales qui viennent d'être mentionnées, le système selon l'invention peut présenter une ou plusieurs caractéristiques supplémentaires parmi les suivantes; toute combinaison de ces caractéristiques supplémentaires, dans la mesure où elles ne s'excluent pas mutuellement, constitue un objet de l'invention :
- le dispositif de correction à l'arrêt ou à grande constante de temps de l'assiette du véhicule comporte un dispositif d'émission d'un point lumineux spécifique ;
- le deuxième ensemble d'informations produit par la deuxième unité de traitement d'images est relatif à une mesure de déviation verticale du cadrage de l'image ;
- la deuxième unité de traitement d'images comporte des moyens pour effectuer une opération de détection et de suivi d'au moins un point particulier présent sur les images acquises ;
- le point particulier de l'image correspond à un coin d'un élément de la scène de route ;
- au moins un des points particuliers est sélectionné dans une zone périphérique latérale des images capturées ;
- le point particulier correspond à la projection du point lumineux spécifique visible sur les images acquises ;
- le dispositif de correction à l'arrêt ou à grande constante de temps fait intervenir une première unité de traitement des images acquises par la caméra ;
- le dispositif de correction à l'arrêt ou à grande constante de temps relève d'une technologie basée sur le temps de vol de la lumière entre la source d'émission et le récepteur photosensible après que cette lumière ait été réfléchie par le revêtement routier ;
- le dispositif de correction à l'arrêt ou à grande constante de temps utilise des capteurs potentiométriques fixés sur le châssis du véhicule et mesurant chacun l'angle que fait avec ce châssis un bras dont une extrémité est montée pivotante sur le châssis et dont l'autre extrémité est raccordée à un élément verticalement solidaire de la roue associée.

La présente invention se rapporte également à un procédé de correction de l'orientation d'une source lumineuse d'un véhicule automobile en fonction de l'assiette dudit véhicule, ledit procédé comportant notamment les différentes étapes consistant à :
- capturer un ensemble d'images d'une scène de route se déroulant devant ou derrière le véhicule ;
- élaborer, à partir des images capturées, un signal de correction à l'arrêt ou à grande constante de temps de l'assiette du véhicule ;
caractérisé en ce que le procédé comporte les différentes étapes supplémentaires consistant à :
- élaborer un signal de correction dynamique de l'assiette du véhicule en réalisant une opération de mesure de déviation du cadrage des images capturées ;
- fusionner le signal de correction à l'arrêt ou à grande constante de temps et le signal de correction dynamique pour obtenir un signal de correction ;
- orienter la source lumineuse en fonction du signal de correction.

Outre les caractéristiques principales qui viennent d'être mentionnées dans le paragraphe précédent, le procédé selon l'invention peut présenter une ou plusieurs caractéristiques supplémentaires parmi les suivantes ; toute combinaison de ces caractéristiques supplémentaires, dans la mesure où elles ne s'excluent pas mutuellement, constitue un objet de l'invention :
- l'étape consistant à élaborer le signal de correction dynamique comporte l'opération consistant à identifier un changement rapide d'assiette ;
- l'étape consistant à élaborer le signal de correction dynamique comporte l'opération consistant à quantifier une amplitude du changement rapide d'assiette ;
- l'étape consistant à élaborer le signal de correction dynamique comporte les opérations consistant à détecter et à suivre un point particulier sur les images capturées ;
- l'étape d'élaboration du signal de correction à l'arrêt ou à grande constante de temps comporte les différentes opérations consistant à :
   - émettre un point lumineux spécifique sur la scène de route ;
   - comparer, sur les images capturées, la position du point lumineux spécifique émis et la position d'un point spécifique de la scène de route situé à une distance préalablement fixée d'une ligne d'horizon préalablement déterminée ;
- le point particulier correspond à la projection du point lumineux spécifique visible sur les images capturées ;
- le point particulier correspond à un coin d'un élément de la scène de route.

La présente invention se rapporte enfin à un véhicule automobile caractérisé en ce qu'il comporte un système de correction de l'orientation d'une source lumineuse présentant les caractéristiques principales, et éventuellement une ou plusieurs caractéristiques supplémentaires précédemment mentionnées.

L'invention et ses différentes applications seront mieux comprises à la lecture de la description qui suit et à l'examen des figures qui l'accompagnent.

Celles-ci ne sont présentées qu'à titre indicatif et nullement limitatif de l'invention. Les figures montrent :
- à la figure 1, déjà décrite, une représentation schématique d'un exemple de réalisation d'un système de commande de l'orientation d'un projecteur de véhicule de l'état de la technique ;
- à la figure 2, une représentation schématique d'un exemple de réalisation selon l'invention d'un système de correction dynamique de l'orientation d'une source lumineuse d'un véhicule ;
- à la figure 3, différents chronogrammes illustrant l'élaboration d'un signal de correction intervenant dans le système et le procédé selon l'invention.

Les différents éléments apparaissant sur plusieurs figures auront gardé, sauf précision contraire, la même référence. Les figures 2 à 3 illustrent un exemple de réalisation du système selon l'invention et de sa mise en oeuvre.

La figure 2 montre un exemple de réalisation d'un système 200 selon l'invention, embarquée sur ou dans un véhicule, pour la correction de l'orientation d'une source lumineuse dudit véhicule, matérialisée ici par le projecteur 104-A. Dans le système 200, une caméra 201 permet d'acquérir une succession d'images représentatives d'une scène de route. La caméra 201 peut être installée au sein du véhicule ou solidairement au véhicule à l'extérieur de celui-ci. Elle peut par exemple être semblable à la caméra 101 utilisée dans le système de l'état de la technique décrit en référence à la figure 1. Notamment, elle peut être du type infrarouge. On peut éventuellement utiliser une caméra déjà installée dans le véhicule pour réaliser d'autres fonctions telles que les fonctions relatives à la vision de nuit ou à la détection d'obstacles. La scène de route filmée peut correspondre soit à ce qui est visible devant le véhicule, soit à ce qui est visible derrière le véhicule.

Dans le système 200, on retrouve le dispositif 102 de correction statique d'assiette déjà présent à la figure 1. Il produit une premier ensemble d'informations I1 relatives à une mesure statique de l'assiette du véhicule. Dans d'autres exemples de réalisation, d'autres dispositifs de correction statique d'assiette peuvent être utilisés en remplacement du dispositif 102. Le dispositif 102 est complété par un dispositif 202 de correction dynamique d'assiette. Les dispositifs 102 et 202 reçoivent tous les deux les images acquises par la caméra 201. Le dispositif 202 de correction dynamique intègre une deuxième unité de traitement d'images. Il produit un deuxième ensemble d'informations 12 relatives à une mesure dynamique de l'assiette du véhicule.

La deuxième unité de traitement d'images est apte à détecter une variation rapide du cadrage des images acquises. Une telle variation peut par exemple être due à une accélération ou à un freinage significatifs du véhicule, l'orientation du dispositif projecteur 104-A n'étant alors plus adaptée à un éclairage optimal si seule la correction statique d'assiette est mise en oeuvre.

Pour détecter une telle variation de cadrage, plusieurs solutions sont possibles. A titre d'exemple, on peut effectuer une opération de suivi de zones des images capturées correspondant à des coins d'éléments visibles sur les images capturées. A cet effet, l'unité de traitement d'images détecte la présence d'au moins un tel coin sur une première image capturée. On entend par « coin » une zone de l'image facilement repérable par une brusque variation du contraste selon les axes horizontal et vertical de l'image.

Des calculs de gradients de luminosité selon un premier axe horizontal, le plan défini par la route étant considéré comme horizontal, et selon un deuxième axe vertical peuvent par exemple être utilisés. Avantageusement, l'opération de détection de coins s'effectue dans des bandes latérales verticales de l'image, formant une partie de la périphérie de l'image, et couvrant environ vingt cinq pour cent de l'image totale. Il est ainsi fort probable de repérer des coins d'éléments de la scène qui correspondent à des éléments non mobiles présents sur le rebord de la route. Ces points évoluent lentement et régulièrement dans les images capturées successivement en fonction de la progression stabilisée du véhicule. En cas de changement brusque d'assiette, ces points montent ou descendent brutalement. Ce phénomène, est facile à identifier et à quantifier en effectuant une opération de suivi vertical des coins repérés. Dans l'invention, on peut en effet se limiter à un suivi vertical de l'évolution de points particuliers détectés sur l'image, une variation d'assiette n'intervenant que sur la composante verticale des points de l'image, ce qui réduit le coût des algorithmes intervenant de même que la durée de traitement. Le dispositif de correction dynamique 202 peut alors fournir instantanément un complément de correction à la correction statique apportée par le dispositif 102.

Afin de faciliter et d'accélérer encore les calculs intervenant dans la deuxième unité de traitement d'images 202, on peut se limiter à la détection et au suivi d'un unique point. Un tel unique point peut par exemple être un des coins détectés. Dans un autre exemple de réalisation de l'invention, un tel unique point correspond à la projection du point lumineux spécifique, émis par la source 105-B, et visible sur les images acquises.

Un dispositif de fusion de données 203 reçoit le premier ensemble d'informations 11 et le deuxième ensemble d'informations 12 à partir desquels il élabore une information de correction dynamique d'assiette, qu'il transforme en signal de correction Sc. Une telle fusion d'informations permet d'obtenir une correction dont un avantage essentiel est de répondre d'une part aux variations lentes d'assiette du véhicule occasionnées notamment par des variations de charge, et d'autre part aux variations rapides d'assiette du véhicule dues notamment aux freinages et accélérations.

Le dispositif de contrôle de rotation 103 de la source lumineuse 104 oriente alors le dispositif projecteur lumineux 104 de façon appropriée en fonction du signal de correction Sc.

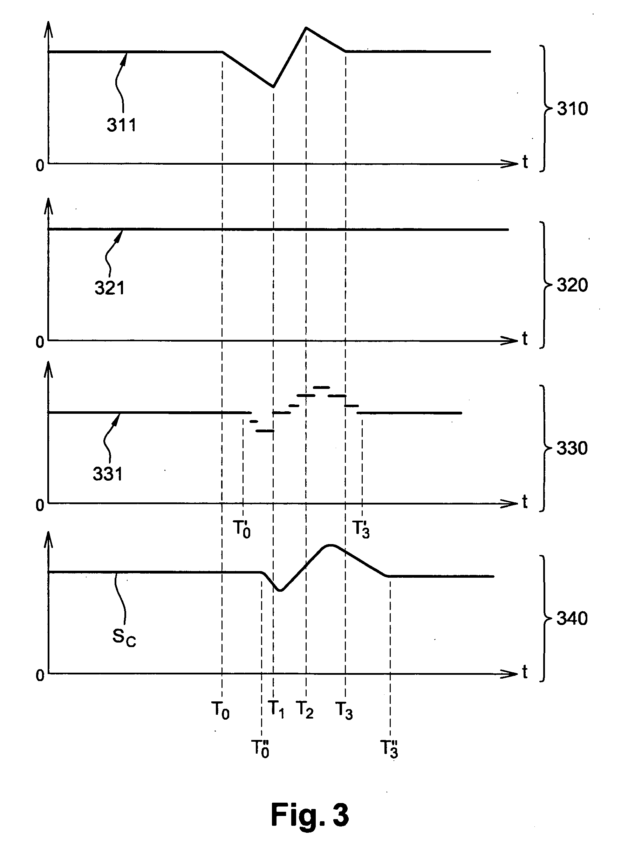

La figure 3 représente différents chronogrammes illustrant l'élaboration du signal de correction intervenant dans le système et le procédé selon l'invention.

Un premier chronogramme 310 correspond aux variations naturelles d'assiette du véhicule en fonction du temps lors d'une opération de freinage du véhicule. On observe ainsi d'abord un signal 311 constant entre les instants 0 et T0, correspondant à la valeur nominale de l'assiette, ou assiette plate, du véhicule avant le freinage de celui-ci. Le véhicule freine à l'instant T0, ce qui provoque instantanément une diminution de la valeur d'assiette jusqu'à l'instant T1 ; le frein est alors relâché, ce qui a pour conséquence de faire augmenter la valeur d'assiette au-delà de sa valeur nominale jusqu'à un instant T2 ;à partir de l'instant T2, le véhicule retrouve progressivement son orientation habituelle, orientation habituelle qu'il retrouve à l'instant T3 où l'assiette reprend sa valeur nominale.

Un deuxième chronogramme 320 représente un signal 321 correspondant aux informations de correction statique I1 produites par le dispositif 102 de correction statique d'assiette. Du fait de la prise en considération d'un grand nombre d'images, espacées dans le temps de façon significative, pour le calcul du premier ensemble d'informations I1, la variation d'assiette observée sur le premier chronogramme ne se traduit par aucun signal de correction statique : le temps nécessaire pour l'acquisition des images et leur traitement est trop important pour réagir face à un tel changement brutal d'assiette.

Un troisième chronogramme 330 correspond aux déplacements d'images verticaux observés et traités par la deuxième unité de traitement d'images du dispositif 202 de correction dynamique d'assiette. Le dispositif 202 émet ainsi un signal 331 en paliers, correspondant au deuxième ensemble d'informations 12, représentatifs, en nombre de lignes visibles sur les images acquises, des variations rapides d'assiette du véhicule dues notamment aux freinages et accélérations ;le retard observé entre le freinage, à l'instant T0, et la production d'une information relative à ce freinage à l'instant T0', n'est pas significatif, en étant inférieur à 0,2 seconde. Un tel retard insignifiant se retrouve en fin de traitement, entre les instants T3 et T3' marquant le retour du signal 331 à une valeur d'assiette plate.

Un quatrième chronogramme 340 correspond au signal de correction Sc obtenu par addition des chronogrammes 320 et 330, en prenant comme valeur de référence la valeur d'assiette plate. Le signal de correction présente alors un retard toujours insignifiant par rapport à l'événement qui lui a donné naissance, le freinage représenté au chronogramme 310. Ce retard, observé entre les instants T0 et T0", instant marquant le début de la variation du signal de correction, ou encore entre les instants T3 et T3", instant marquant la fin de la variation du signal de correction, reste inférieur à 0,2 seconde ; il est dû aux différentes opérations d'acquisition d'images et de calculs intervenant pour réaliser la fusion des ensembles d'informations 11 et 12. Ce retard est donc tout à fait satisfaisant pour proposer une correction dynamique d'assiette du véhicule.

## Revendications

1. . Système de correction(200) de l'orientation d'une source lumineuse (104-A) d'un véhicule en fonction de l'assiette dudit véhicule, ledit système comportant :
- une caméra (201), montée dans le véhicule, pour acquérir une succession d'images représentatives d'une scène de route se déroulant devant ou derrière le véhicule;
- un dispositif (102) de correction à l'arrêt ou à grande constante de temps de l'assiette du véhicule produisant un premier ensemble d'informations (I1) relatives à une mesure de l'assiette du véhicule,
**caractérisé en ce que** le système de correction comporte également :
- une unité de traitement d'images (202), acquises par la caméra, produisant un deuxième ensemble d'informations (I2) relatives à une mesure de déviation d'un cadrage des images acquises ;
- un dispositif de fusion de données (203) pour combiner le premier ensemble d'informations et le deuxième ensemble d'informations et produire une information de correction d'assiette (Sc).

2. . Système de correction de l'orientation d'une source lumineuse selon la revendication précédente, **caractérisé en ce que** le dispositif de correction à l'arrêt ou à grande constante de temps de l'assiette du véhicule comporte un dispositif d'émission (104B) d'un point lumineux spécifique.

3. . Système de correction de l'orientation d'une source lumineuse selon l'une au moins des revendications précédentes, **caractérisé en ce que** le deuxième ensemble d'informations produit par l'unité de traitement d'images produisant un deuxième ensemble d'informations (I2) est relatif à une mesure de déviation verticale du cadrage de l'image.

4. . Système de correction de l'orientation d'une source lumineuse selon l'une au moins des revendications précédentes, **caractérisé en ce que** l'unité de traitement d'images produisant ledit deuxième ensemble d'informations (I2) comporte des moyens pour effectuer une opération de détection et de suivi d'au moins un point particulier présent sur les images acquises.

5. . Système de correction de l'orientation d'une source lumineuse selon la revendication précédente, **caractérisé en ce que** le point particulier de l'image correspond à un coin d'un élément de la scène de route.

6. . Système de correction de l'orientation d'une source lumineuse selon l'une au moins des revendications 4 ou 5, **caractérisé en ce que** au moins un des points particuliers est sélectionné dans une zone périphérique latérale des images acquises.

7. . Système de correction de l'orientation d'une source lumineuse selon l'une au moins des revendications 4 à 6 et selon la revendication 2, **caractérisé en ce que** le point particulier correspond à la projection du point lumineux spécifique visible sur les images acquises.

8. Système de correction de l'orientation d'une source lumineuse selon l'une au moins des revendications précédentes, **caractérisé en ce que** le dispositif de correction à l'arrêt ou à grande constante de temps fait intervenir une première unité de traitement des images acquises par la caméra.

9. Système de correction de l'orientation d'une source lumineuse selon l'une au moins des revendications précédentes, **caractérisé en ce que** le dispositif de correction à l'arrêt ou à grande constante de temps relève d'une technologie basée sur le temps de vol de la lumière entre la source d'émission et le récepteur photosensible après que cette lumière ait été réfléchie par le revêtement routier.

10. Système de correction de l'orientation d'une source lumineuse selon l'une au moins des revendications précédentes, **caractérisé en ce que** le dispositif de correction à l'arrêt ou à grande constante de temps utilise des capteurs potentiométriques fixés sur le châssis du véhicule et mesurant chacun l'angle que fait avec ce châssis un bras dont une extrémité est montée pivotante sur le châssis et dont l'autre extrémité est raccordée à un élément verticalement solidaire de la roue associée.

11. Système de correction de l'orientation d'une source lumineuse selon l'une au moins des revendications précédentes, **caractérisé en ce que** le dispositif de correction produisant un premier ensemble d'informations (I1) est un dispositif de correction à grande constante de temps.

12. Procédé de correction de l'orientation d'une source lumineuse (104A) d'un véhicule automobile en fonction de l'assiette dudit véhicule, ledit procédé comportant notamment les différentes étapes consistant à :
- capturer un ensemble d'images d'une scène de route se déroulant devant ou derrière le véhicule ;
- élaborer, à partir des images capturées, un signal de correction de correction à l'arrêt ou à grande constante de temps de l'assiette du véhicule,
**caractérisé en ce que** le procédé comporte les différentes étapes supplémentaires consistant à :
- élaborer un signal de correction dynamique de l'assiette du véhicule en réalisant une opération de mesure de déviation du cadrage des images capturées ;
- fusionner le signal de correction à l'arrêt ou à grande constante de temps de l'assiette du véhicule et le signal de correction dynamique pour obtenir un signal de correction ;
- orienter la source lumineuse en fonction du signal de correction.

13. Procédé de correction de l'orientation d'une source lumineuse selon la revendication 12, **caractérisé en ce que** l'étape consistant à élaborer le signal de correction dynamique comporte les opérations consistant à détecter et à suivre un point particulier sur les images capturées.

14. Procédé de correction de l'orientation d'une source lumineuse selon la revendication précédente, **caractérisé en ce que** l'étape d'élaboration du signal de correction à l'arrêt ou à grande constante de temps comporte les différentes opérations consistant à :
- émettre un point lumineux spécifique sur la scène de route ;
- comparer, sur les images capturées, la position du point lumineux spécifique émis et la position d'un point spécifique de la scène de route situé à une distance préalablement fixée d'une ligne d'horizon préalablement déterminée.

15. Procédé de correction de l'orientation d'une source lumineuse selon la revendication précédente, **caractérisé en ce que** le point particulier correspond à la projection du point lumineux spécifique visible sur les images capturées.

16. Procédé de correction de l'orientation d'une source lumineuse selon l'une au moins des revendications 13 à 15, **caractérisé en ce que** le point particulier correspond à un coin d'un élément de la scène de route.

17. Véhicule automobile, **caractérisé en ce qu'**il comporte un système de correction de l'orientation d'une source lumineuse selon l'une au moins des revendications 1 à 11.

## Claims

1. System (200) for correcting the orientation of a light source (104-A) of a vehicle according to the attitude of the said vehicle, the said system comprising:
- a camera (201), mounted in the vehicle, for acquiring a succession of images representing a road scene unfolding in front of or behind the vehicle;
- a device (102) for correction of the vehicle attitude statically or with a long time constant, producing a first set of information (I1) relating to a measurement of the vehicle attitude;
**characterised in that** the correction system also comprises:
- a unit for processing images (202) acquired by the camera, producing a second set of information (I2) relating to a measurement of deviation of a framing of the images acquired;
- a data merging device (203) for combining the first set of information and the second set of information and producing attitude correction information (Sc).

2. System for correcting the orientation of a light source according to the preceding claim, **characterised in that** the device for the correction of the attitude of the vehicle statically or with a long time constant comprises a device (104B) for emitting a specific light spot.

3. System for correcting the orientation of a light source according to at least one of the preceding claims, **characterised in that** the second set of information produced by the image processing unit producing a second set of information (I2) relates to a measurement of vertical deviation of the framing of the image.

4. System for correcting the orientation of a light source according to at least one of the preceding claims, **characterised in that** the image processing unit producing the said second set of information (I2) comprises means for performing an operation of detecting and following at least one particular point present on the acquired images.

5. System for correcting the orientation of a light source according to the preceding claim, **characterised in that** the particular point of the image corresponds to a corner of the element of the road scene.

6. System for correcting the orientation of a light source according to at least one of claims 4 or 5, **characterised in that** at least one of the particular points is selected in a lateral peripheral zone of the acquired images.

7. System for correcting the orientation of a light source according to at least one of claims 4 to 6 and according to claim 2, **characterised in that** the particular point corresponds to the projection of the specific light spot visible on the acquired images.

8. System for correcting the orientation of a light source according to at least one of the preceding claims, **characterised in that** the device for correction statically or with a long time constant involves a first unit for processing the images acquired by the camera.

9. System for correcting the orientation of a light source according to at least one of the preceding claims, **characterised in that** the device for correction statically or with a long time constant involves a technology based on the travel time of the light between the emission source and the photosensitive receiver after this light has been reflected by the road surface.

10. System for correcting the orientation of a light source according to at least one of the preceding claims, **characterised in that** the device for correction statically or with a long time constant uses potentiometric sensors fixed to the vehicle chassis and each measuring the angle formed with this chassis by an arm, one end of which is pivotally mounted on the chassis and the other end of which is connected to an element vertically secured to the associated wheel.

11. System for correcting the orientation of a light source according to at least one of the preceding claims, **characterised in that** the correction device producing a first set of information (I1) is a correction device with a long time constant.

12. Method of correcting the orientation of a light source (104A) of a motor vehicle according to the attitude of the said vehicle, the said method comprising in particular the various steps consisting of:
- capturing a set of images of a road scene unfolding in front of or behind the vehicle;
- producing, from the captured images, a correction signal for correction of the attitude of the vehicle statically or with a long time constant;
**characterised in that** the method comprises the various additional steps consisting of:
- producing a signal for dynamic correction of the attitude of the vehicle by performing an operation of measuring the deviation in the framing of the captured images;
- merging the signal for correction statically or with a long time constant and the dynamic correction signal in order to obtain a correction signal;
- orienting the light source according to the correction signal.

13. Method of correcting the orientation of a light source according to claim 12, **characterised in that** the step consisting of producing the dynamic correction signal comprises the operations consisting of detecting and following a particular point on the captured images.

14. Method of correcting the orientation of a light source according to the preceding claim, **characterised in that** the step of producing the signal for correction statically or with a long time constant comprises the various operations consisting of:
- emitting a specific light spot on the road scene;
- comparing, on the captured images, the position of the specific light spot emitted and the position of a specific point on the road scene situated at a previously fixed distance from a previously determined horizon line.

15. Method of correcting the orientation of a light source according to the preceding claim, **characterised in that** the particular point corresponds to the projection of the specific light spot visible on the captured images.

16. Method of correcting the orientation of a light source according to at least one of claims 13 to 15, **characterised in that** the particular point corresponds to a corner of an element of the road scene.

17. Motor vehicle, **characterised in that** it comprises a system for correcting the orientation of a light source according to at least one of claims 1 to 11.

## Patentansprüche

1. System (200) zur Korrektur der Ausrichtung einer Lichtquelle (104-A) eines Fahrzeugs in Abhängigkeit der Niveaulage dieses Fahrzeugs, wobei das System umfasst:
- eine im Fahrzeug montierte Kamera (201) zum Erfassen einer Reihe aufeinanderfolgender Bilder, die für eine vor oder nach dem Fahrzeug liegende Straßenszene repräsentativ sind;
- eine Korrekturvorrichtung (102) bei Stillstand oder mit großer Zeitkonstante des Fahrzeugniveaus, die einen ersten Informationssatz (I1) in Bezug auf eine Messung des Fahrzeugniveaus erzeugt,
**dadurch gekennzeichnet, dass** das Korrektursystem ferner umfasst:
- eine Einheit (202) zum Verarbeiten der von der Kamera erfassten Bilder, die einen zweiten Informationssatz (12) in Bezug auf eine Messung der Abweichung einer Ausrichtung der erfassten Bilder erzeugt;
- eine Vorrichtung (203) zur Datenzusammenführung, um den ersten Informationssatz und den zweiten Informationssatz miteinander zu kombinieren und eine Niveaukorrekturinformation (Sc) zu erzeugen.

2. System zur Korrektur der Ausrichtung einer Lichtquelle nach dem vorhergehenden Anspruch,
**dadurch gekennzeichnet, dass** die Korrekturvorrichtung bei Stillstand oder mit großer Zeitkonstante des Fahrzeugniveaus eine Vorrichtung (104B) zum Aussenden eines spezifischen Lichtpunktes umfasst.

3. System zur Korrektur der Ausrichtung einer Lichtquelle nach wenigstens einem der vorhergehenden Ansprüche,
**dadurch gekennzeichnet, dass** der zweite Informationssatz, der durch die einen zweiten Informationssatz (12) erzeugende Bildverarbeitungseinheit erzeugt wird, eine Messung der vertikalen Abweichung der Bildausrichtung betrifft.

4. System zur Korrektur der Ausrichtung einer Lichtquelle nach wenigstens einem der vorhergehenden Ansprüche,
**dadurch gekennzeichnet, dass** die den zweiten Informationssatz (12) erzeugende Bildverarbeitungseinheit Mittel zum Durchführen eines Schritts zum Erkennen und Verfolgen wenigstens eines bestimmten, in den erfassten Bildern vorhandenen Punktes umfasst.

5. System zur Korrektur der Ausrichtung einer Lichtquelle nach dem vorhergehenden Anspruch,
**dadurch gekennzeichnet, dass** der bestimmte Bildpunkt einer Ecke eines Elements aus der Straßenszene entspricht.

6. System zur Korrektur der Ausrichtung einer Lichtquelle nach wenigstens einem der Ansprüche 4 oder 5,
**dadurch gekennzeichnet, dass** wenigstens einer der bestimmten Punkte in einem seitlichen Randbereich der erfassten Bilder ausgewählt wird.

7. System zur Korrektur der Ausrichtung einer Lichtquelle nach wenigstens einem der Ansprüche 4 bis 6 und nach Anspruch 2,
**dadurch gekennzeichnet, dass** der bestimmte Punkt der Projektion des in den erfassten Bildern sichtbaren spezifischen Lichtpunktes entspricht.

8. System zur Korrektur der Ausrichtung einer Lichtquelle nach wenigstens einem der vorhergehenden Ansprüche,
**dadurch gekennzeichnet, dass** die Korrekturvorrichtung bei Stillstand oder mit großer Zeitkonstante eine erste Einheit zur Verarbeitung der durch die Kamera erfassten Bilder einbezieht.

9. System zur Korrektur der Ausrichtung einer Lichtquelle nach wenigstens einem der vorhergehenden Ansprüche,
**dadurch gekennzeichnet, dass** die Korrekturvorrichtung bei Stillstand oder mit großer Zeitkonstante auf einer Technologie beruht, die auf der Laufzeit des Lichts zwischen der Emissionsquelle und dem lichtempfindlichen Empfänger nach Reflexion des Lichts durch den Straßenbelag basiert.

10. System zur Korrektur der Ausrichtung einer Lichtquelle nach wenigstens einem der vorhergehenden Ansprüche,
**dadurch gekennzeichnet, dass** die Korrekturvorrichtung bei Stillstand oder mit großer Zeitkonstante potentiometrische Sensoren verwendet, die an der Fahrzeugkarosserie befestigt sind und jeweils den Winkel messen, den ein Arm mit der Karosserie beschreibt, dessen eines Ende drehbar an der Karosserie montiert ist und dessen anderes Ende mit einem Element verbunden ist, das mit dem zugeordneten Rad vertikal fest verbunden ist.

11. System zur Korrektur der Ausrichtung einer Lichtquelle nach wenigstens einem der vorhergehenden Ansprüche,
**dadurch gekennzeichnet, dass** die einen ersten Informationssatz (I1) erzeugende Korrekturvorrichtung eine Korrekturvorrichtung mit großer Zeitkonstante ist.

12. Verfahren zur Korrektur der Ausrichtung einer Lichtquelle (104A) eines Kraftfahrzeugs in Abhängigkeit der Niveaulage dieses Fahrzeugs, wobei das Verfahren insbesondere die folgenden einzelnen Schritte umfasst:
- Erfassen eines Bildsatzes einer vor oder nach dem Fahrzeug liegenden Straßenszene;
- Erzeugen eines Korrektursignals anhand der erfassten Bilder zur Korrektur bei Stillstand oder mit großer Zeitkonstante des Fahrzeugniveaus;
**dadurch gekennzeichnet, dass** das Verfahren die folgenden zusätzlichen einzelnen Schritte umfasst:
- Erzeugen eines dynamischen Korrektursignals des Fahrzeugniveaus durch Ausführen eines Schritts zum Messen der Abweichung der Ausrichtung der erfassten Bilder;
- Zusammenführen des Korrektursignals bei Stillstand oder mit großer Zeitkonstante des Fahrzeugniveaus mit dem dynamischen Korrektursignal zum Erhalt eines Korrektursignals;
- Ausrichten der Lichtquelle in Abhängigkeit des Korrektursignals.

13. Verfahren zur Korrektur der Ausrichtung einer Lichtquelle nach Anspruch 12, **dadurch gekennzeichnet, dass** der Schritt zum Erzeugen des dynamischen Korrektursignals Schritte zum Erkennen und Verfolgen eines bestimmten Punktes in den erfassten Bildern umfasst.

14. Verfahren zur Korrektur der Ausrichtung einer Lichtquelle nach dem vorhergehenden Anspruch,
**dadurch gekennzeichnet, dass** der Schritt zum Erzeugen des Korrektursignals bei Stillstand oder mit großer Zeitkonstante die folgenden einzelnen Schritte umfasst:
- Aussenden eines spezifischen Lichtpunktes in die Straßenszene;
- Vergleichen der Lage des ausgesandten spezifischen Lichtpunktes in den erfassten Bildern mit der Lage eines spezifischen Punktes der Straßenszene, der in einem vorab festgelegten Abstand zu einer vorab bestimmten Horizontlinie liegt.

15. Verfahren zur Korrektur der Ausrichtung einer Lichtquelle nach dem vorhergehenden Anspruch,
**dadurch gekennzeichnet, dass** der bestimmte Punkt der Projektion des in den erfassten Bildern sichtbaren spezifischen Lichtpunktes entspricht.

16. Verfahren zur Korrektur der Ausrichtung einer Lichtquelle nach wenigstens einem der Ansprüche 13 bis 15,
**dadurch gekennzeichnet, dass** der bestimmte Punkt einer Ecke eines Elements aus der Straßenszene entspricht.

17. Kraftfahrzeug,
**dadurch gekennzeichnet, dass** es ein System zur Korrektur der Ausrichtung einer Lichtquelle nach wenigstens einem der Ansprüche 1 bis 11 umfasst.
